# EUROPEAN PATENT APPLICATION

(11) **EP 3 020 694 A1**
(43) Date of publication of application: **18.05.2016**
(21) Application number: 15827647.7
(22) Date of filing: 30.07.2015
(51) Int. Cl.: C06B 31/28

(54) **METHODS FOR PRODUCING EXPLOSIVE ANFO AND HEAVY ANFO COMPOSITIONS**

(30) Priority: 31.07.2014 US 201414448000; 31.07.2014 US 201414447917; 13.07.2015 PE 0013162015
(71) Applicant: Exsa S.A., Lima 27 (PE)
(72) Inventor: RUÍZ VALLE, Heberth Lawrency, Lima 33 (PE); MASLO LUNA, Karl Georg, Lima 33 (PE)
(74) Representative: Carvajal y Urquijo, Isabel
(86) International application number: PCT/PE2015/000013
(87) International publication number: WO 2016/018163

(57) **Abstract**

The present invention is related to methods for making explosive compositions comprising ammonium nitrate and fuel, also known as ANFO (Ammonium Nitrate/Fuel Oil) and the explosive compositions comprising bulk emulsion and ANFO, also known as heavy ANFO. In particular, the present invention comprises two types of method to the use of ammonium nitrate of high density for the development of these explosive compositions.

## Description

### Field of the invention

The present invention is related to methods for making explosive compositions comprising ammonium nitrate and fuel, also known as ANFO (ammonium nitrate / fuel oil) and the explosive compositions comprising bulk emulsion and ANFO, also known as heavy ANFO. In particular, the present invention comprises two types of method to the use of ammonium nitrate of high density in the development of these explosive compositions.

### Description of the state of the art

ANFO type explosives (ammonium nitrate / fuel oil) are a mixture of ammonium nitrate with fuel, and are used as blast agents in industry and mining. Generally, ANFO type explosives consist of 94% of ammonium nitrate and 6% of fuel, and have a bulk density between 0.8 and 0.9 kg / L. The ammonium nitrate particles used for ANFO type explosives are porous and spherical, since the air cavities enclosed in the micropore structure of the particles provide a greater number of initiation points with high sensitivity to detonation, also called hot spots. These points are adiabatically compressed as a result of mechanical action and transfer the initiation energy through the load. The fuel is absorbed by the ammonium nitrate particles to produce a free-flowing particulate mixture which can be detonated. Other additives may be added to this mixture to modify the properties of the ANFO type explosive, such as guar gum and polyisobutylene to enhance water resistance type.

The detonation velocity of the ANFO type explosive is within the range of 2500 to 3500 m/s due to its volumetric density and flame temperature, which are lower than those of other industrial explosives. The sensitivity of these materials to detonation is smaller than that of other types of explosives such as emulsion and dynamite; therefore, manipulation of ANFO type explosives has a lower risk. The ANFO performance depends on the quality of the ammonium nitrate particles used and the efficiency in the mixture of those with the fuel.

Heavy ANFO type explosives consist of a mixture of bulk emulsion and ANFO. The use of such emulsion as a coating material creates a water resistant barrier around the particles of ANFO, eliminating the problem of its low water resistance. This waterproof layer also improves other characteristics of ANFO, increasing its density, detonation velocity, sensitivity to initiation and intensity of shockwave. Heavy ANFO is generally prepared in a mixer truck in which, first, the ANFO is prepared, and then mixed with the emulsion. The bulk emulsion used in the preparation of heavy ANFO can be gasified or not gasified. The heavy ANFO system allows great flexibility in relation to bulk emulsion ANFO. This relationship or ratio can be optimized depending on the specific requirements of the blast.

As it has been mentioned, the ANFO and heavy ANFO type explosive normally require porous ammonium nitrate particles. However, the present invention proposes two methods for making heavy ANFO using ammonium nitrate of high density, technical grade or fertilizer, as a substitute for porous ammonium nitrate in the manufacturing process of ANFO. The first consists on the heat treatment of ammonium nitrate of high density modifying its crystal structure and obtaining therefore a reduction in density and an increase in the fuel absorption capacity. Therefore, enabling the use of ammonium nitrate heat treated to produce ANFO and heavy ANFO. The second is the use of ammonium nitrate of high density for making ANFO, modifying the explosive composition to use less fuel than regular ANFO type explosives. And then, the use of aerated bulk emulsion with the ANFO type explosive composition to obtain heavy ANFO.

Regarding the first proposed method, there are is a precedent in the US Patent 5,240,524 which aims to reduce the density of ammonium nitrate increasing its pore space through treatment with a gasifying agent. The cited invention uses a liquid medium which is a solvent of ammonium nitrate and a gasifying agent such as sodium nitrate, to penetrate cracks or pre-existing fissures in the particle and cause a chemical reaction with formation of gaseous products that increase size of the cracks and expel liquid outwardly. However, the present application is a method for treating ammonium nitrate which differs completely from what was proposed by the US patent 5,240,524, because it includes only the variation of the crystal structure of ammonium nitrate by heating the particles by conduction, without chemical reactions or the use of liquid media or gasifying agents. Consequently, the characteristics of the porous spaces also differ since the first case has increased the size of cracks and fissures while in the present invention a reorganization of the molecules of ammonium nitrate is produced.

Another method used to reduce the density of ammonium nitrate is found in US patent 5,540,793 which consists of a method for manufacturing ammonium nitrate using encapsulated microspheres which reduce the density of the product. The invention extends to ANFO and heavy ANFO type explosive compositions made from ammonium nitrate of reduced density. This method differs from the present invention as it adds physical agents such as microspheres and must be done during the manufacture of ammonium nitrate. Additionally, the density of ammonium nitrate particles can reach values lower than those of the present invention, between 0.54 and 0.67 kg/L.

Likewise, the document US 5,409,556 consists in preparing heavy ANFO type explosive compositions with a reduced density by adding expanded grains such as corn, rice or wheat, up to 10 percent of the composition. This composition can be prepared using porous or high density ammonium nitrate. The cited invention differs from the present invention since it entails the addition of raw materials such as expanded grains, and the density reduction of the heavy ANFO type explosive composition, instead of reducing density of ammonium nitrate.

Additionally, the document US 4,853,050 is known, which is related to a method for producing an explosive composition comprising particulate ammonium nitrate, where its water resistance is improved by a coating of asphalt; as well as the method for preparing such ANFO/ explosive emulsion mixtures using ammonium nitrate with improved characteristics. The treatment made to ammonium nitrate proposed in this invention aims to improve the water resistance, and not to modify the crystalline structure of ammonium nitrate. Even as opposed to the present invention it results in an increased density of the ammonium nitrate treated.

Furthermore, the document US 4,084,995 relates to the preparation of a granulated explosive composition based on ammonium nitrate and calcium nitrate, which are heated, with a liquid phase which includes fuel and water at temperatures where the salts are combined, and then cooled with mechanical stirring. The resulting explosive composition shows an increased sensitivity to the detonators and a lower critical diameter, characteristics dependent on the physical state of the mixture resulting from the treatment received, and not on the chemical composition. However, the goal of the treatment made to the ammonium nitrate differs from the present invention since it is not intended to modify its crystal structure but to combine ammonium nitrate and calcium nitrate to obtain a mixture with a particular physical state.

Regarding the second proposed method, it has been preceded in US Patent 2006/0243362, in which Houston et. al. used ammonium nitrate of similar features to those presented herein for high density ammonium nitrate to produce a hydrogel type explosive composition. However, the system in which this raw material is used, and the only one in which tests have been done according to the patent, completely differs from heavy ANFO based on gasified emulsion and ANFO which is proposed in this invention.

Also, in the state of the art, it is known the US Patent 5,458,707 which uses an emulsion gasified type explosive composition for the manufacturing of heavy ANFO. However, the invention aims to modify the composition of the gasifiable emulsion based on a PIBSA, including an ester of orthophosphoric acid and a co-emulsifier to prevent degradation of the emulsion in the interaction with the porous ammonium nitrate in the preparation of heavy ANFO. Instead, the present invention does not change the characteristics of the gasifiable emulsion as it used ammonium nitrate of high density or heat treated ammonium nitrate to replace porous ammonium nitrate.

### Summary of the Invention

The present invention includes two methods for the production of heavy ANFO using ammonium nitrate of high density.

The first method involves heat treatment of ammonium nitrate of high density by loading the ammonium nitrate of high density in a tank; the entry of ammonium nitrate of high density in a heating device at room temperature; heating the ammonium nitrate of high density within said heating device; removal of the treated ammonium nitrate from the heating device at a temperature less than 60 °C and sieving the treated ammonium nitrate, so that the heat treated ammonium nitrate is obtained.

Heat treated ammonium nitrate is used for the preparation of ANFO at a temperature below 30° C by loading it in a tank; fuel loading into a separate tank; feeding heat treated ammonium nitrate into a mixing chamber while the fuel is fed into the same chamber; and mixing the heat treated ammonium nitrate and fuel, obtaining ANFO.

The heat treated ammonium nitrate is also used for the manufacture of heavy ANFO by feeding from a hopper to a mixing chamber and injecting the fuel in the feeding pipe of heat treated ammonium nitrate, obtaining ANFO; loading bulk emulsion gasified or not gasified in the hopper; feeding bulk emulsion in the same chamber as the ANFO; and the mixture of bulk emulsion and ANFO, obtaining heavy ANFO.

The second proposed method in the present invention is the use of ammonium nitrate of high density, with a density of 0.95 kg/L to 1.00 kg/L, for the preparation of heavy ANFO through loading ammonium nitrate of high density in a hopper, feeding ammonium nitrate of high density in the mixing chamber and injecting fuel into the feeding tube of ammonium nitrate in a fuel proportion: ammonium nitrate of high density from 2:98 to 6:94; loading bulk emulsion into a hopper and the gasified of said bulk emulsion; feeding said emulsion gasified in the same mixing chamber of ANFO in a gasified bulk emulsion ratio: ANFO from 20:80 to 70.30; and the mixture of both components getting heavy ANFO.

### Description of figures

Figure 1 shows the process and related components therein used for heat treatment of the ammonium nitrate of high density.
Figure 2 shows the process and related components therein for the manufacture of ANFO.
Figure 3 shows the process and related components used in the manufacture of heavy ANFO.

### Detailed description of the Invention

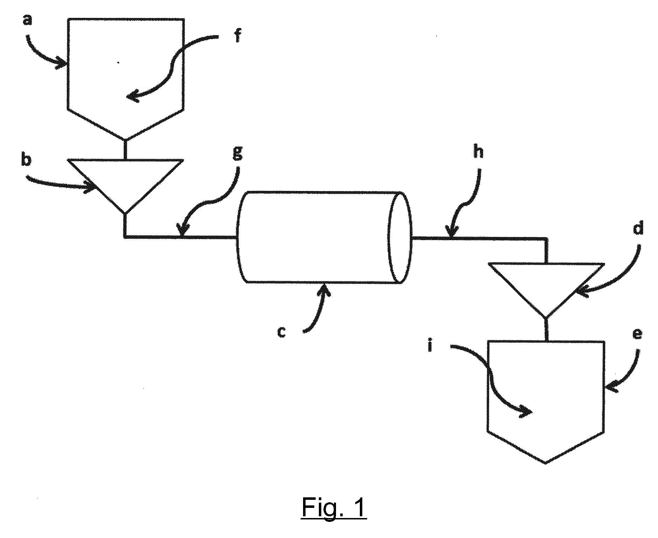

The first embodiment of the present invention is a method for modifying the crystal structure of ammonium nitrate of high density, preferably technical grade or fertilizer, creating pores in the particles. As a result, the density of the ammonium nitrate is reduced while the optimal characteristics of hardness of the particles is maintained and the fuel absorption capacity of the same increases. A process for heat treatment of ammonium nitrate of high density, preferably technical grade or fertilizer, which is illustrated in Figure 1 is proposed.

The first step is to load the ammonium nitrate of high density (1.f), which normally has the properties listed in Tables 1 and 2, in a tank (1a). Then, the ammonium nitrate is sieved (1b) to remove the fines. This step is performed in order to avoid a reduction in the efficiency of the heating process due to variability in the particle size of the ammonium nitrate. If it has less than 5% of fines, there is no need to sift it before entering the heating device (1c).

**Table 1. Differences between ammonium nitrate technical grade and Ammonium Nitrate of Fertilizer Grade.**

| **Parameter** | **Unit** | **Ammonium nitrate of high density** | |
|---|---|---|---|
| | | **Technical Grade** | **Fertilizer Grade** |
| Purity (NH₄NO₃) | % | ≥98.5 | ≥97.5 |
| Insoluble | % | 0 | ≤2 |
| Calcium (CaO) | % | 0 | ≤2 |
| Magnesium (MgO) | % | 0 | ≤2 |
| Phosphorus (P₂O₅) | % | 0 | ≤3.5 |
| Potassium (K₂O) | % | 0 | ≤2 |

In the next step, the ammonium nitrate of high density (1.g) enters the heating device (1c) at room temperature. The heating process is the indirect heat transfer by conduction between the walls of the device and the particles of ammonium nitrate of high density. The purpose of the heat treatment is to increase the temperature of the particles to generate changes in the crystal structure of the ammonium nitrate avoiding to affect its moisture content.

The change sought in the crystal structure occurs due to the phase transition of ammonium nitrate from Phase IV to Phase III; and it is associated with an increase of volume and reduction of density due to the rearrangement of the molecules. These changes in the crystal structure of ammonium nitrate are known and usually occur during storage of the raw material due to temperature cycling. However, modification of the physical properties accompanying the phase transition is considered unfavorable because it affects the desired properties of ammonium nitrate, reducing the hardness, flowability, and causing crusting. Together, these changes have resulted in a reduced sensitivity to initiation and detonation.

The present invention proposes an application of physical change caused by the phase transition of ammonium nitrate of high density. Therefore, the temperature and time of treatment of the ammonium nitrate of high density in the heating device (1.c.) and the temperature of ammonium nitrate when it exits the heating device (1.h.), are critical variables in the proposed method. The temperature at which this transition phase starts is 32.3 °C and continues until 51 ° C, after which a bridge that prevents the transition to Phase III is created, changing directly from Phase IV to II, which may affect the generation of pores and considerably reduce the hardness of ammonium nitrate. Therefore, the temperature of the heating device (1c) should fluctuate between 50 °C and 150 °C; and the temperature of ammonium nitrate when it exits the heating device (1.h) should not exceed 60 ° C, and preferably should be between 40 and 60 ° C. The treatment time of ammonium nitrate of high density is directly related to the temperature of the ammonium nitrate treated when it exits the heating device (1.h). Normally, this treatment time can vary between 1 and 10 minutes, and preferably should be between 3 and 4 minutes.

Other variables that may influence the efficiency of the heat treatment are related to the characteristics of the particles of ammonium nitrate of high density, being the variation in the density and fuel absorption capacity less obvious in those particles that initially have a greater hardness, less porous space or cracks, and present inorganic additives. On the other hand, particles of ammonium nitrate of high density with less hardness would be more affected by the treatment causing increased fines generation due to the fragility of the particles, and causing problems in the preparation of ANFO and heavy ANFO. Preferably the ammonium nitrate of high density should have a bulk density between 0.95 and 1.00 kg/L, an absorption capacity of fuel less than or equal to 4% and a hardness of 0.4 to 0.6 kg/particle. Also, both the heat treatment and the methods used for the preparation of ANFO and heavy ANFO should generate the least friction and possible damages in order to avoid generation of fine since heat treated ammonium nitrate particles are weaker.

The next step is the sieving (1d) to the outlet of the heating device (1c) to remove the fines which were generated in the previous stage. The product obtained is heat treated ammonium nitrate (1.i), which has a bulk density between 0.80 and 0.90 kg/L, an absorption capacity of fuel between 5 and 8%, and a hardness of 0.2 to 0.5 kg/particle. This sieving step (1.d) is required to remove potential problems associated with small particles of ammonium nitrate for subsequent use in the manufacture of ANFO and heavy ANFO.

**Table 2. Properties of Ammonium Nitrate of High Density, Porous Ammonium Nitrate and Heat Treated Ammonium Nitrate**

| **Parameter** | **Unit** | **Ammonium Nitrate of High Density** | **Porous Ammonium Nitrate** | **Heat Treated Ammonium Nitrate** |
|---|---|---|---|---|
| Bulk density | kg/L | 0.95 - 100 | 0.72 - 0.82 | 0.80 - 0.90 |
| Absorption capacity of oil | % | ≤4 | 7 - 14 | 5 - 8 |
| Hardness | kg/particle | 0.4 - 0.6 | 0.35 - 0.55 | 0.2 - 0.5 |

Heat treated ammonium nitrate (1.i) can be used instead of porous ammonium nitrate in the manufacture of explosives ANFO and heavy ANFO type. For the preparation of ANFO, heat treated ammonium nitrate must be at temperature lower than 30 °C and preferably between room temperature and 30 °C. The greater decrease in density and increased absorption of oil, the heat treated ammonium nitrate according to the present invention shows better results in the elaboration of ANFO and heavy ANFO.

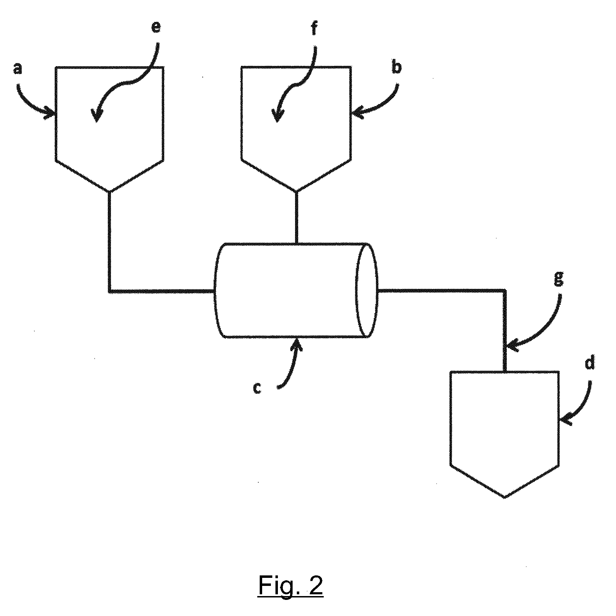

The manufacturing process of ANFO is performed according to the flowchart shown in Figure 2. The process includes the mixture (2.c) of heat treated ammonium nitrate (2.e) with fuel (2.f) in a ratio of 95: 5 or 94: 6, and preferably in a ratio 94: 6. Fuel (2-f) used in the manufacturing process of ANFO may be biofuel, biodiesel, diesel, mineral oil, residual oil, among others.

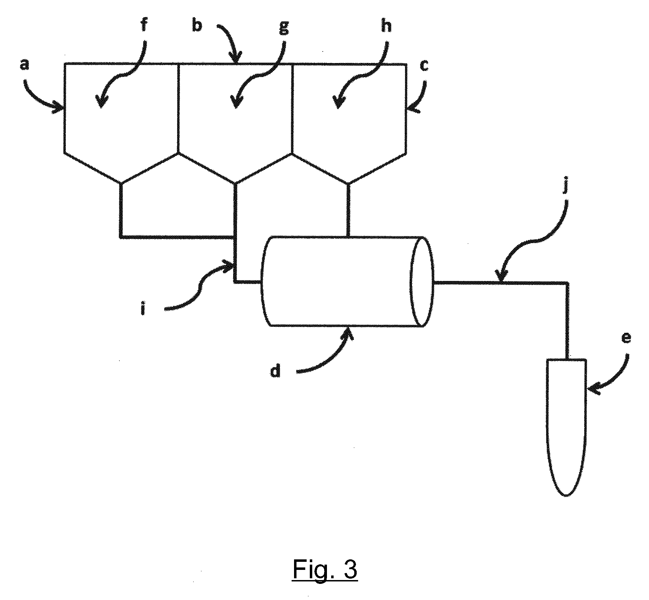

The manufacturing process of heavy ANFO is performed according to the flowchart shown in Figure 3, preferably in mixing trucks in mining operations. The first step of the process is the load of heat treated ammonium nitrate (3.g) in a hopper (3.b). Then the fuel (3.f) contained in the hopper (3.a) is injected into the supply pipe of heat treated ammonium nitrate, obtaining ANFO (3.i). This mixture is prepared in proportions of 98:2 to 94:6, and preferably 97:3. Fuel (3f) used in the process of elaboration of the heavy ANFO can be biofuel, biodiesel, diesel, mineral oil, residual oil, among others. Then the bulk emulsion (3.h) contained in a hopper (3.c) is gasified and then is mixed with the ANFO (3.i), obtaining a heavy ANFO (3.j). The ratio for mixing the bulk emulsion (3.h) with ANFO (3.i) is preferably among the following: 20:80, 30:70, 40:60, 50:50, 60:40 and 70:30. The bulk emulsion used for this preparation may be gasified or non-gasified. The final product (3.j) is charged into the drills (3-e) in mining operations.

The second embodiment of this invention is the use of ammonium nitrate of high density, preferably of technical grade or fertilizer, as a substitute for porous ammonium nitrate in the preparation of ANFO for the production of heavy ANFO. To achieve this goal, the ANFO type explosive composition is modified to use less fuel than regular ANFO type explosive, and the bulk emulsion is gasified for the development of heavy ANFO.

The development of heavy ANFO is performed as illustrated in Figure 3. This process is performed preferably in a truck mixer located in the different mining units. The process includes feeding ammonium nitrate of high density (3.g), with a bulk density between 0.95 and 1.00 kilograms per liter (kg/L) and an fuel absorption capacity of less than or equal to 4%, in an hopper (3b). Ammonium nitrate of high density used in this preparation has preferably the characteristics described in Tables 1 and 2.

The fuel (3.f) into the hopper (3.a) is injected to the feed pipe ammonium nitrate high density, obtaining ANFO (3.i). The ratio of this mixture can range from 98: 2 to 94: 6 and preferably 97: 3. The proportion of ammonium nitrate and fuel is determined based on the absorption capacity of ammonium nitrate fuel density and the high oxygen balance is to be achieved. Fuel (3.g) used for the production of heavy ANFO may include biofuel, biodiesel, diesel, mineral oil and residual oil.

Bulk emulsion (3h) in the hopper (3.c) must be gasified. In this process, a gasifying agent chemically reacts with the oxidizer salt phase under appropriate pH conditions to produce a fine dispersion of bubbles of nitrogen gas through the emulsion. The gasifying agents used generally include a variety of gas-generating materials, which are known in the art. Preferably, the gasifying agent is a nitrite, specifically an alkali metal nitrite, and more specifically sodium nitrite. Chemical gassing of these compositions is achieved through the reaction between nitrite and ammonium ion with the nitrogen gas generation. The gasifying agent can be mixed with a secondary chemical compound, which is used as a catalyst to increase the rate at which the reaction occurs, such as sodium thiocyanate or thiourea and others. The reaction of chemical gassing using gasifying agents such as nitrite can be accelerated, for example by reducing the pH of the gasifying solution. Preferably, the pH should be lowered to values between 1 and 5, and more specifically from 2 to 4. Suitable acids to lower the pH of the oxidizing solution include sulfuric acid, nitric acid, acetic acid, and others known in the art.

Subsequently, the gasified bulk emulsion (3.h) is mixed with ANFO (3.i), obtaining heavy ANFO (3.j). The ratio for mixing gasified bulk emulsion (3.h) with ANFO (3.j) can be between the following, 20:80, 30:70, 40:60, 50:50, 60:40 and 70 30. And, preferably between 60:40 and 70:30. The final product (3.j) is used for the loading of drill (3-e) in mining operations.

## Claims

1. A method for heat treating the ammonium nitrate of high density, because the method comprises:
a) Load nitrate high density in a tank;
b) Enter the ammonium nitrate of high density in a heating device, where the ammonium nitrate is at room temperature at the inlet;
c) Heat the ammonium nitrate of high density in the heating device;
d) Remove the treated ammonium nitrate heating device; where the outlet temperature does not exceed 60 ° C; and
e) Sift the ammonium nitrate, obtaining heat treated ammonium nitrate.

2. The method according to claim 1, characterize because the nitrate of high density is fertilizer grade or technical grade.

3. The method according to claim 1, characterized because the ammonium nitrate of high density has a bulk density of 0.95 to 1.00 kg/L, an absorption capacity of fuel less than 4% and a hardness of 0.4 to 0.6 kg/particle.

4. The method according to claim 1, characterized because the ammonium nitrate of high density is sieved prior to entering the heating device.

5. The method according to claim 1, characterized because the temperature of the heating device is between 50 and 150 ° C.

6. The method according to claim 1, characterized because the temperature of ammonium nitrate at the outlet of the heating device is between 40 and 60 °C.

7. The method according to claim 1, characterized because the treatment time in the heating device is from 1 to 10 minutes.

8. A method for preparing ANFO **characterized by** comprising:
a. Load heat treated ammonium nitrate in a tank where the temperature of heat treated ammonium nitrate is below 30 °C;
b. Load fuel in a separate tank;
c. Feed heat treated ammonium nitrate in a mixing chamber while fuel is fed into the same mixing chamber; and
d. Mixing heat treated ammonium nitrate and fuel, obtaining ANFO.

9. The method according to claim 8, characterized because the heat treated ammonium nitrate has a bulk density of 0.80 to 0.90 kg/L, a fuel absorption capacity of 5-8% and a hardness of 0.2-0.5 kg/particle.

10. The method according to claim 8, characterized because the fuel is biofuel, biodiesel, diesel, mineral oil or residual oil.

11. The method according to claim 8, the mixing ratio of the heat treated nitrate ammonium respect to fuel is from 95:5 to 94:6.

12. A method for preparing heavy ANFO, characterized because the method comprises:
a. Load heat treated ammonium nitrate in a hopper;
b. Feed heat treated ammonium nitrate in a mixing chamber while fuel is fed into the supply pipe of the heat treated ammonium nitrate, obtaining ANFO;
c. Loading bulk emulsion into a hopper, where the bulk emulsion may be aerated or gasified;
d. Feed the bulk emulsion in the same mixing chamber as the ANFO; and
e. Mix the bulk emulsion and the ANFO, getting heavy ANFO.

13. The method according to claim 12, characterized because the heat treated ammonium nitrate has a bulk density of 0.80 to 0.90 kg/L, a fuel absorption capacity of 5-8% and a hardness of 0.2-0.5 kg/particle.

14. The method according to claim 12, characterized because the fuel is biofuel, biodiesel, diesel, mineral oil or residual oil.

15. The method according to claim 12 characterized because the mixing ratio of fuel relative to the heat-treated ammonium nitrate is 2:98 to 6:94.

16. A method according to claim 12, characterized because the mixing ratio of bulk emulsion relative to ANFO is from 20:80 to 70:30.

17. A method for preparing heavy ANFO, characterized because the method comprises:
a. Load ammonium nitrate of high density in a hopper;
b. Feeding the ammonium nitrate of high density into a mixing chamber while fuel is fed into the supply pipe of the heat treated ammonium nitrate, obtaining ANFO;
c. Loading the bulk emulsion into a hopper, where the bulk emulsion is gasified;
d. Feeding the gasified bulk emulsion into the same mixing chamber as the ANFO; and
e. Mixing the bulk emulsion and the ANFO, getting heavy ANFO.

18. The method according to claim 17, characterized because the ammonium nitrate of high density has a bulk density of 0.95 to 1.00 kg/L and a fuel absorption capacity of less than 4%.

19. The method according to claim 17, characterized because the fuel is biofuel, biodiesel, diesel, mineral oil or residual oil.

20. The method according to claim 17 characterized because the ratio of mixing the fuel respect to the ammonium nitrate of high density is from 2:98 to 6:94, or 3:97.
A method according to claim 17, characterized because the ratio of mixing the bulk emulsion to gasified ANFO is from 20:80 to 70:30.
